# EUROPEAN PATENT SPECIFICATION

(11) **EP 2 308 724 B1**
(45) Date of publication and mention of the grant of the patent: **22.10.2014**
(21) Application number: 10179114.3
(22) Date of filing: 24.09.2010
(51) Int. Cl.: B60R 25/10, G08B 25/00

(54) **Vehicle with an alarm system**
Fahrzeug mit einem Alarmsystem
Véhicule avec système d'alarme

(30) Priority: 06.10.2009 SE 0950730
(43) Date of publication of application: 13.04.2011
(73) Proprietor: Scania CV AB (publ), 151 87 Södertälje (SE)
(72) Inventor: Lindberg, Mikael, SE-171 42, SOLNA (SE)

(56) References cited:
- WO-A1-2009/153639
- DE-A1-102007 011 813
- DE-A1-102008 057 862
- US-A1- 2004 075 553
- US-A1- 2005 064 895
- US-A1- 2007 171 854
- US-A1- 2008 012 693

## Description

### Field of the invention

The present invention relates to a vehicle with an alarm system, and a method for an alarm system, according to the preambles of the independent claims.

### Background to the invention

A vehicle, e.g. a truck, provided with an alarm for drawing attention to damage, to attempted theft etc. is often provided with a telematic unit intended to pass the alarm on via the mobile network (GSM/GPRS/3G, etc.) to an alarm centre, e.g. via an external communication antenna.

DE 102007011813 discloses a vehicle according to the preamble of claim 1.

US-2004/0075553 refers to a theft protection device for vehicles which comprises a unit for transmission of data to at least one other vehicle, depending on whether various conditions are fulfilled, based inter alia on whether an emergency signal has been transmitted and on where the vehicles are situated relative to one another.

US-2007/0167147 refers to a mobile device for wireless transmission of emergency information, e.g. in a vehicle. When the mobile device is used in a vehicle, it communicates wirelessly with sensors in the vehicle and can automatically generate an alarm over the mobile network, e.g. GSM or CDMA.

A problem with the alarm systems currently in use is that there are various ways of preventing the alarm being sent to or reaching the alarm centre, e.g. an external antenna may be destroyed or screened or transmission of the alarm signal may in some other way be prevented.

The object of the present invention is to eliminate this problem and at the same time indicate a solution which is simple and therefore inexpensive to implement by means of the systems which are currently present in vehicles.

### Summary of the invention

The above objects are achieved by the invention as defined by the independent claims.

Preferred embodiments are defined by the dependent claims.

Expanding the existing alarm procedure by adding the generation of, for example, a short-wave alarm if no confirmation is received that the alarm generated via the first-hand alternative, i.e. the antenna, has been received and causing a nearby vehicle to receive the alarm and pass it on to the alarm centre, increase the possibility of the alarm centre being quickly alerted despite, for example, the antenna having been damaged or a metal screen having been placed round it.

If an attempt to break into the vehicle is detected as a result of someone trying to break open a door, smash a window etc., the alarm system will inter alia try to send an alarm signal to an alarm centre via the antenna, i.e. via the mobile network GSM, GPRS, 3G etc.

If no confirmation is received within a certain time that the alarm centre has received the alarm signal, the alarm system according to the invention generates a second alarm signal which is transmitted in the form of, for example, a short-wave signal with limited range with a view to being received by an alarm system in a nearby vehicle, e.g. a truck, which then alerts the alarm centre via its antenna.

For the invention to be applicable, another vehicle with corresponding equipment needs to be in the vicinity, which is often the case where, for example, haulage operations, ferry terminals, cargo transfer stations etc. are involved.

A great advantage of the present invention is that it is relatively easy to implement in that no extra hardware is required, since existing communication channels are used, i.e. the mobile network and the communication unit for short-range communication which is used by the vehicle's remote control.

### Brief description of the drawings

Figure 1 is a schematic diagram illustrating the present invention.
Figure 2 is a schematic block diagram illustrating the invention.
Figure 3 is a flowchart illustrating the invention.

### Detailed description of preferred embodiments of the invention

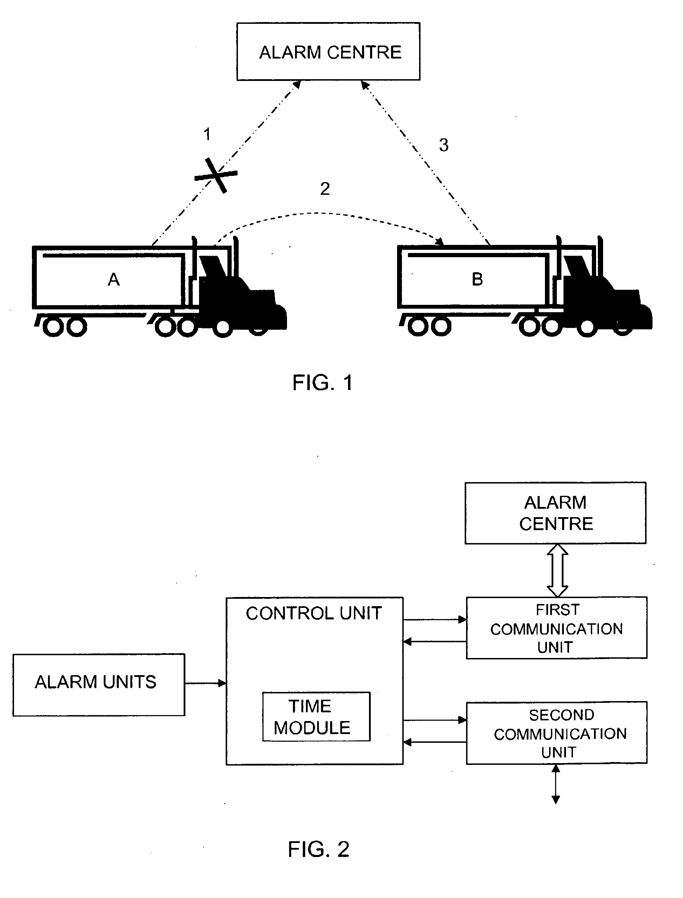

Figure 1 depicts schematically two trucks A and B. An attempt is made to break into truck A and one of the alarm units generates an alarm for transmission to the alarm centre via a first communication unit. Before the attempted break-in, the external antenna of the communication unit has been destroyed to prevent any alarm being sent to the alarm centre. The aborted transmission is indicated in the diagram by the cross placed on a signal from A to the alarm centre. This step is indicated by ref. 1 in the diagram.

As no acknowledgement signal is received by the first communication unit within a specific period of time, a second alarm signal is generated instead by a second communication unit whose antenna is situated in the vehicle and can therefore not be interfered with from outside. This second alarm signal has a maximum range of 200 metres. It is received by a communication unit in a vehicle B which is within a distance of 200 metres from vehicle A. This step is indicated by ref. 2 in the diagram. When vehicle B receives the second alarm signal, it generates an alarm signal which is transmitted to alarm centre and which contains inter alia information about the alarm generated from vehicle A. This step is indicated by ref. 3 in the diagram.

The invention will now be described in more detail with reference to the block diagram in Figure 2.

The invention relates to a vehicle provided with an alarm system schematically depicted in Figure 2. The alarm system comprises one or more alarm units adapted to responding to predetermined circumstances by generating alarm signals, a first communication unit comprising an antenna for wireless transmission to an alarm centre, a second communication unit adapted to wireless communication within a predetermined immediate vicinity, and a control unit which is connected to and controls said alarm units and said first and second communication units. The control unit further comprises a time module.

The alarm units may for example take the form of movement sensors in the vehicle, sensors which detect smashing of a windscreen, sensors which detect a door being broken open, and other types of sensors.

The control unit is adapted to receiving alarm signals from the alarm units and thereupon causing the first communication unit to transmit a first alarm signal to the alarm centre. An acoustic alarm is preferably also generated by, for example, the vehicle's horn being activated.

The time module is adapted to activating a timer when the first alarm signal is transmitted, and if no acknowledgement signal from the alarm centre to the effect that it has received the alarm signal is received within a predetermined period of time from when the timer is activated, the control unit is adapted to causing the second communication unit to transmit a second alarm signal. The predetermined period of time may for example be 5-15 seconds from when the time module is activated. The length of time adopted does of course depend on various factors, including the particular wireless transmission technology used for communication with the alarm centre. This communication is preferably via the mobile network, e.g. via GSM, GPRS, CDMA, 3G, etc., and the first communication unit preferably comprises an antenna situated on top of the vehicle.

The second alarm signal transmitted is adapted to being received by a communication unit in a nearby vehicle which thereupon initiates the transmission of an alarm signal to the alarm centre.

The second communication unit is provided with an antenna situated protectedly in the vehicle and therefore not accessible from outside the vehicle but adapted to wireless communication within a predetermined immediate vicinity, with a maximum range of, for example, 200 metres.

According to an embodiment, the second communication unit communicates wirelessly according to 802.11 standard or according to Bluetooth standard. It is preferably also adapted to being used for communication with a remote control used, for example, to lock the vehicle and/or activate the alarm in the vehicle.

The second alarm signal contains information about the vehicle's identity, time of signal, the occurrence which triggered the alarm, and an instruction for the communication unit receiving the signal to generate for transmission to the alarm centre an alarm signal which contains that information.

The second communication unit is further adapted to receiving an alarm signal generated by a communication unit of another nearby vehicle and transmitted by the abovementioned technology, the first communication unit is adapted to generating a first alarm signal to the alarm centre in response to an alarm signal received, and the alarm signal transmitted contains inter alia information about the nearby vehicle's identity, time of signal and the occurrence which triggered the alarm.

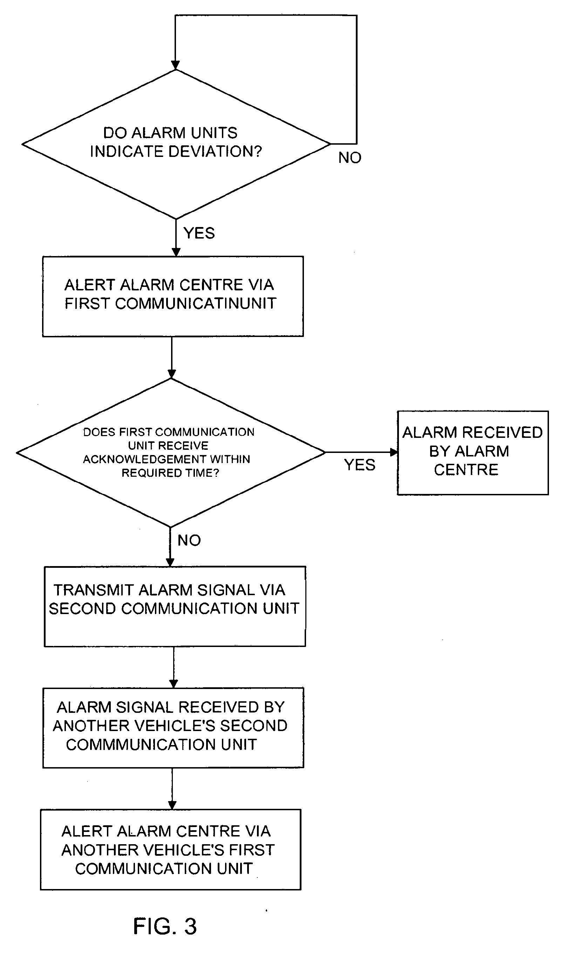

The present invention relates also to a method, illustrated by the flowchart in Figure 3, for an alarm system in a vehicle, comprising the steps of:
A) one or more alarm units generating alarm signals when predetermined circumstances or deviations are fulfilled, e.g. a window pane is smashed or a door is broken open,
B) alarm signals generated being conveyed to a control unit which causes a first communication unit to transmit a first alarm signal to a distant alarm centre,
C) activating a timer in the control unit at the same time as the first alarm signal is transmitted.

If an acknowledgement is received within a prescribed time, e.g. a maximum of 5-15 seconds, the alarm centre has received the alarm and will then adopt appropriate measures, e.g. sending police or security staff.

If however no acknowledgement signal from the alarm centre to the effect that it has received the alarm signal is received within a predetermined period of time from when the timer is activated, the control unit then causes a second communication unit to transmit a second alarm signal adapted to being received by a communication unit in a nearby vehicle which thereupon initiates the transmission of an alarm signal to the alarm centre. The second alarm signal contains information about the vehicle's identity, time of signal, the occurrence which triggered the alarm, and an instruction to generate an alarm signal which contains said information.

The present invention is not limited to the preferred embodiments described above. Other alternatives, modifications or equivalents may be used. The embodiments described above are therefore not to be regarded as limiting the invention's scope of protection which is defined by the attached claims.

## Claims

1. A vehicle provided with an alarm system comprising one or more alarm units adapted to responding to predetermined circumstances by generating alarm signals, a first communication unit comprising an antenna for wireless transmission to an alarm centre, a second communication unit adapted to wireless communication within a predetermined immediate vicinity, and a control unit which is connected to and controls said alarm units and said first and second communication units, which control unit further comprises a time module and is adapted to receiving alarm signals from alarm units and thereupon causing the first communication unit to transmit a first alarm signal to the alarm centre, wherein the first communication unit comprises an antenna situated on top of the vehicle, wherein the second communication unit is provided with an antenna situated protectedly in the vehicle and therefore not accessible from outside the vehicle,
**characterised in that**
the time module is adapted to activating a timer when the first alarm signal is transmitted, and if no acknowledgement signal from the alarm centre to the effect that it has received the alarm signal is received within a predetermined period of time from when the timer is activated, the control unit is adapted to causing the second communication unit to transmit a second alarm signal adapted to being received by a communication unit in a nearby vehicle which thereupon initiates the transmission of an alarm signal to the alarm centre, and wherein the second communication unit is adapted to receiving an alarm signal generated by a communication unit of another nearby vehicle, the first communication unit is adapted to generating a first alarm signal to the alarm centre in response to an alarm signal received, and the alarm signal transmitted contains inter alia information about the other vehicle's identity, time of signal and the occurrence which triggered the alarm.

2. A vehicle according to claim 1, in which the first communication unit is adapted to wireless transmission via GSM, 3G, GPRS, CDMA.

3. A vehicle according to any one of claims 1-2, in which the second communication unit is adapted to wireless communication within a predetermined immediate vicinity and has a maximum range of 200 metres.

4. A vehicle according to any one of claims 1-3, in which the second communication unit is adapted to communicating wirelessly according to 802.11 standard or Bluetooth standard.

5. A vehicle according to any one of claims 1-4, in which the second communication unit is adapted to being also used for communication with a remote control used, for example, to lock the vehicle and/or activate the alarm in the vehicle.

6. A vehicle according to any one of claims 1-5, in which the second alarm signal contains information about the vehicle's identity, time of signal, the occurrence which triggered the alarm, instructions to generate an alarm signal which contains said information.

7. A vehicle according to any one of claims 1-6, in which the predetermined period of time is 5-15 seconds from when the time module is activated.

8. A method for an alarm system in a vehicle, comprising the steps of
A) one or more alarm units generating alarm signals when predetermined circumstances are fulfilled,
B) alarm signals generated being conveyed to a control unit which causes a first communication unit comprising an antenna situated on top of the vehicle, to transmit a first alarm signal to a distant alarm centre,
C) activating a timer in the control unit at the same time as the first alarm signal is transmitted,
**characterised in that**
if no acknowledgement signal from the alarm centre to the effect that it has received the alarm signal is received within a predetermined period of time from when the timer is activated, the control unit then causes a second communication unit to transmit a second alarm signal adapted to being received by a communication unit in a nearby vehicle which thereupon initiates the transmission of an alarm signal to the alarm centre, wherein the second communication unit receives an alarm signal generated by a communication unit of another nearby vehicle, the first communication unit generates a first alarm signal to the alarm centre in response to an alarm signal received, and the alarm signal transmitted contains inter alia information about the other vehicle's identity, time of signal and the occurrence which triggered the alarm, wherein the second communication unit is provided with an antenna situated protectedly in the vehicle and therefore not accessible from outside the vehicle but adapted to wireless communication within a predetermined immediate vicinity.

9. A method according to claim 8, in which the second alarm signal contains information about the vehicle's identity, time of signal, the occurrence which triggered the alarm, instructions to generate an alarm signal which contains said information.

10. A method according to any one of claims 8-9 in which the predetermined period of time is 5-15 seconds from when the time module is activated.

## Patentansprüche

1. Fahrzeug, welches mit einem Alarmsystem versehen ist, das Alarmsystem umfassend eine oder mehrere Alarmeinheiten, welche ausgebildet sind, auf vorbestimmte Umstände durch Erzeugen von Alarmsignalen zu reagieren, eine erste Kommunikationseinheit, welche eine Antenne zur drahtlosen Übertragung an eine Alarmzentrale umfasst, eine zweite Kommunikationseinheit, welche zur drahtlosen Kommunikation innerhalb einer vorbestimmten unmittelbaren Umgebung ausgebildet ist, und eine Steuereinheit, welche mit den Alarmeinheiten und der ersten und der zweiten Kommunikationseinheit verbunden ist und welche die Alarmeinheiten und die erste und die zweite Kommunikationseinheit steuert, wobei die Steuereinheit weiter ein Zeitmodul umfasst und ausgebildet ist, Alarmsignale von Alarmeinheiten zu empfangen und daraufhin die erste Kommunikationseinheit zu veranlassen, ein erstes Alarmsignal an die Alarmzentrale zu übertragen, wobei die erste Kommunikationseinheit eine Antenne umfasst, welche sich auf der Oberseite des Fahrzeugs befindet, und wobei die zweite Kommunikationseinheit mit einer Antenne versehen ist, weiche sich geschützt im Fahrzeug und daher unzugänglich von außerhalb des Fahrzeugs befindet,
**dadurch gekennzeichnet, dass**
das Zeitmodul ausgebildet ist, einen Timer zu aktivieren, wenn das erste Alarmsignal übertragen ist, und dann, wenn innerhalb einer vorbestimmten Zeitspanne, nachdem der Timer aktiviert wird, kein Bestätigungssignal von der Alarmzentrale dahingehend empfangen wird, dass die Alarmzentrale das Alarmsignal empfangen hat, die Steuereinheit ausgebildet ist, die zweite Kommunikationseinheit zu veranlassen, ein zweites Alarmsignal zu übertragen, welches ausgebildet ist, von einer Kommunikationseinheit in einem sich in der Nähe befindlichen Fahrzeug empfangen zu werden, welches daraufhin die Übertragung eines Alarmsignals an die Alarmzentrale einleitet, und wobei die zweite Kommunikationseinheit ausgebildet ist, ein Alarmsignal zu empfangen, welches von einer Kommunikationseinheit eines anderen sich in der Nähe befindlichen Fahrzeugs erzeugt wird, wobei die erste Kommunikationseinheit zum Erzeugen eines ersten Alarmsignals an die Alarmzentrale als Reaktion auf das empfangene Signal ausgebildet ist, und das übertragene Alarmsignal unter anderem Informationen über die Identität des anderen Fahrzeugs, die Signalzeit und das den Alarm auslösende Ereignis beinhaltet.

2. Fahrzeug nach Anspruch 1, wobei die erste Kommunikationseinheit zur drahtlosen Übertragung via GSM, 3G, GPRS, CDMA ausgebildet ist.

3. Fahrzeug nach einem der Ansprüche 1 bis 2, wobei die zweite Kommunikationseinheit zur drahtlosen Kommunikation innerhalb einer vorbestimmten unmittelbaren Umgebung ausgebildet ist und eine maximale Reichweite von 200 Metern aufweist.

4. Fahrzeug nach einem der Ansprüche 1 bis 3, wobei die zweite Kommunikationseinheit zum drahtlosen Kommunizieren nach dem 802.11-Standard oder dem Bluetooth-Standard ausgebildet ist.

5. Fahrzeug nach einem der Ansprüche 1 bis 4, wobei die zweite Kommunikationseinheit ausgebildet ist, auch zur Kommunikation mit einer Fernsteuerung benutzt zu werden, welche beispielsweise benutzt wird, um das Fahrzeug zu verriegeln und/oder den Alarm im Fahrzeug zu aktivieren.

6. Fahrzeug nach einem der Ansprüche 1 bis 5, wobei das zweite Alarmsignal Informationen über die Identität des Fahrzeugs, eine Signalzeit, das den Alarm auslösende Ereignis und Anweisungen zum Erzeugen eines Alarmsignals mit diesen Informationen beinhaltet.

7. Fahrzeug nach einem der Ansprüche 1 bis 6, wobei es sich bei der vorbestimmten Zeitspanne um 5 bis 15 Sekunden handelt, nachdem das Zeitmodul aktiviert ist.

8. Verfahren für ein Alarmsystem in einem Fahrzeug, umfassend die Schritte:
A) Erzeugen von Alarmsignalen durch eine oder mehrere Alarmeinheiten, wenn vorbestimmte Umstände erfüllt sind,
B) Übermitteln der erzeugten Alarmsignale an eine Steuereinheit, welche eine erste Kommunikationseinheit, die eine sich auf der Oberseite des Fahrzeugs befindliche Antenne umfasst, veranlasst, ein erstes Alarmsignal an eine entfernte Alarmzentrale zu übertragen,
C) Aktivieren eines Timers in der Steuereinheit zur gleichen Zeit, zu der das erste Alarmsignal übertragen wird,
**dadurch gekennzeichnet, dass** dann, wenn
innerhalb einer vorbestimmten Zeitspanne, nachdem der Timer aktiviert wird, kein Bestätigungssignal von der Alarmzentrale dahingehend empfangen wird, dass die Alarmzentrale das Alarmsignal empfangen hat, die Steuereinheit dann eine zweite Kommunikationseinheit veranlasst, ein zweites Alarmsignal zu übertragen, welches ausgebildet ist, von einer Kommunikationseinheit in einem sich in der Nähe befindlichen Fahrzeug empfangen zu werden, welches daraufhin die Übertragung eines Alarmsignals an die Alarmzentrale einleitet, wobei die zweite Kommunikationseinheit ein Alarmsignal empfängt, welches von einer Kommunikationseinheit eines anderen sich in der Nähe befindlichen Fahrzeugs erzeugt wird, wobei die erste Kommunikationseinheit ein erstes Alarmsignal an die Alarmzentrale als Reaktion auf ein empfangenes Alarmsignal erzeugt, und das übertragene Alarmsignal unter anderem Informationen über die Identität des anderen Fahrzeugs, eine Signalzeit und das den Alarm auslösende Ereignis beinhaltet, wobei die zweite Kommunikationseinheit mit einer Antenne versehen ist, welche sich geschützt im Fahrzeug und daher unzugänglich von außerhalb des Fahrzeugs befindet, welche aber zur drahtlosen Kommunikation innerhalb einer vorbestimmten unmittelbaren Umgebung ausgebildet ist.

9. Verfahren nach Anspruch 8, wobei das zweite Alarmsignal Informationen über die Identität des Fahrzeugs, eine Signalzeit, das den Alarm auslösende Ereignis und Anweisungen zum Erzeugen eines Alarmsignals mit diesen Informationen beinhaltet.

10. Verfahren nach einem der Ansprüche 8 bis 9, wobei es sich bei der vorbestimmten Zeitspanne um 5 bis 15 Sekunden handelt, nachdem das Zeitmodul aktiviert ist.

## Revendications

1. Véhicule équipé d'un système d'alarme comprenant une ou plusieurs unités d'alarme apte(s) à répondre à des circonstances prédéterminées en produisant des signaux d'alarme, une première unité de communication qui comporte une antenne servant pour la transmission sans fil à un centre d'alarme, une seconde unité de communication apte à exécuter une communication sans fil dans les limites d'un voisinage immédiat prédéterminé, et une unité de commande qui est connectée auxdites unités d'alarme et auxdites première et seconde unités de communication et qui les commande, laquelle unité de commande comprend en outre un module à temps et est apte à recevoir des signaux d'alarme provenant d'unités d'alarme et, à ce moment, à amener la première unité de communication à transmettre un premier signal d'alarme au centre d'alarme, la première unité de communication comprenant une antenne située sur la partie haute du véhicule et la seconde unité de communication étant dotée d'une antenne située de façon protégée dans le véhicule, et donc inaccessible de l'extérieur du véhicule,
**caractérisé en ce que**
le module à temps est apte à activer une minuterie lorsque le premier signal d'alarme est transmis et, si aucun signal d'accusé de réception provenant du centre d'alarme, indiquant qu'il a reçu le signal d'alarme, n'est reçu dans un laps de temps prédéterminé à partir de l'instant où la minuterie est activée, l'unité de commande est apte à amener la seconde unité de communication à transmettre un second signal d'alarme apte à être reçu par une unité de communication située dans un véhicule proche, qui déclenche alors la transmission d'un signal d'alarme au centre d'alarme, et la seconde unité de communication est apte à recevoir un signal d'alarme produit par une unité de communication d'un autre véhicule proche, la première unité de communication étant apte à produire un premier signal d'alarme transmis au centre d'alarme en réponse à un signal d'alarme reçu, et le signal d'alarme transmis contenant, entre autres, de l'information relative à l'identité de l'autre véhicule, à l'instant du signal et à la circonstance qui a déclenché l'alarme.

2. Véhicule selon la revendication, dans lequel la première unité de communication est apte à exécuter une transmission sans fil via GSM, 3G, GPRS, CDMA.

3. Véhicule selon une quelconque des revendications 1 à 2, dans lequel la seconde unité de communication est apte à exécuter une communication sans fil dans un voisinage immédiat prédéterminé et possède une portée maximum de 200 mètres.

4. Véhicule selon une quelconque des revendications 1 à 3, dans lequel la seconde unité de communication est apte à communiquer sans fil selon la norme 802.11 ou la norme Bluetooth.

5. Véhicule selon une quelconque des revendications 1 à 4, dans lequel la seconde unité de communication est apte à être aussi utilisée pour communiquer avec une télécommande utilisée, par exemple, pour verrouiller le véhicule et/ou pour activer l'alarme située dans le véhicule.

6. Véhicule selon une quelconque des revendications 1 à 5, dans lequel le second signal d'alarme contient de l'information relative à l'identité du véhicule, à l'instant du signal, à la circonstance qui a déclenché l'alarme, et des instructions pour produire un signal d'alarme qui contient ladite information.

7. Véhicule selon une quelconque des revendications 1 à 6, dans lequel le laps de temps prédéterminé est de 5 à 15 secondes à partir de l'instant où le module à temps est activé.

8. Procédé pour un système d'alarme situé dans un véhicule, comprenant les étapes consistant en ce que :
A) une ou plusieurs unités d'alarme produisent des signaux d'alarme lorsque des circonstances prédéterminées sont présentes,
B) les signaux d'alarme produits sont envoyés à une unité de commande qui amène une première unité de communication qui comprend une antenne située sur la partie haute du véhicule à transmettre à premier signal d'alarme à un centre d'alarme distant,
C) une minuterie contenue dans l'unité de commande est activée en même temps que le premier signal d'alarme est transmis, **caractérisé en ce que** si aucun signal d'accusé de réception provenant du centre d'alarme, indiquant qu'il a reçu le signal d'alarme, n'est reçu dans un laps de temps prédéterminé à partir de l'instant où la minuterie est activée, l'unité de commande amène alors une seconde unité de communication à transmettre un second signal d'alarme apte à être reçu par une unité de communication située dans un véhicule proche qui déclenche à ce moment la transmission d'un signal d'alarme au centre d'alarme, la seconde unité de communication recevant un signal d'alarme produit par une unité de communication d'un autre véhicule proche, la première unité de communication produisant un premier signal d'alarme transmis au centre d'alarme en réponse à un signal d'alarme reçu, et le signal d'alarme transmis contenant, entre autres, de l'information relative à l'identité de l'autre véhicule, à l'instant du signal et à la circonstance qui a déclenché l'alarme, la seconde unité de communication étant équipée d'une antenne située de façon protégée dans le véhicule, et donc inaccessible de l'extérieur du véhicule, mais apte à exécuter une communication sans fil dans les limites d'un voisinage immédiat prédéterminé.

9. Procédé selon la revendication 8, dans lequel le second signal d'alarme contient de l'information relative à l'identité du véhicule, à l'instant du signal, à la circonstance qui a déclenché l'alarme, et des instructions pour produire un signal d'alarme qui contient ladite information.

10. Procédé selon une quelconque des revendications 8 à 9, dans lequel le laps de temps prédéterminé est de 5 à 15 secondes à partir de l'instant où le module de temporisation est activé.
